(19) Europäisches Patentamt
European Patent Office
Office européen des brevets

(11) **EP 2 936 055 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **13805358.2**

(22) Anmeldetag: **13.12.2013**

(51) Int Cl.:
***G01C 19/5726*** *(2012.01)* ***G01C 19/5719*** *(2012.01)*

(86) Internationale Anmeldenummer:
**PCT/EP2013/076498**

(87) Internationale Veröffentlichungsnummer:
**WO 2014/095607 (26.06.2014 Gazette 2014/26)**

(54) **SENSOR ZUM ERFASSEN EINER DREHRATE EINES OBJEKTES**

SENSOR FOR DETECTING A ROTATION RATE OF AN OBJECT

CAPTEUR PERMETTANT DE DÉTECTER UNE VITESSE DE ROTATION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2012 DE 102012224081**

(43) Veröffentlichungstag der Anmeldung:
**28.10.2015 Patentblatt 2015/44**

(73) Patentinhaber: **Continental Teves AG & Co. OHG 60488 Frankfurt am Main (DE)**

(72) Erfinder:
• **GÜNTHNER, Stefan
60439 Frankfurt am Main (DE)**
• **SCHMID, Bernhard
61169 Friedberg (DE)**
• **LOHMANN, Jasmin
64753 Brombachtal (DE)**

(56) Entgegenhaltungen:
**WO-A2-2009/057990 DE-A1-102010 002 796
US-A- 5 780 740 US-A1- 2011 153 251**

**Beschreibung**

Die Erfindung betrifft einen Sensor zum Erfassen einer Drehrate eines Objektes, ein Verfahren zum Erfassen einer Drehrate eines Objektes, eine Steuervorrichtung zur Durchführung des Verfahrens und ein Fahrzeug.

Aus der DE 10 2010 002 796 A1 ist ein Drehratensensor zur Erfassung einer Gierrate und einer Nickrate eines Fahrzeuges bekannt. Der Drehratensensor umfasst ein Geberelement, das eingerichtet ist, winklig zur Drehachse der zu erfassenden Drehrate mit einer Anregefrequenz an einem ortsfest am Objekt befestigten Rückstellelement zu schwingen, so dass das Geberelement aufgrund der Corioliskraft winklig zur Drehachse und winklig zur Schwingungsrichtung in einer Reaktionsrichtung mit einer Reaktionsfrequenz ausgelenkt wird. Dabei ist ein Messaufnehmer eingerichtet, die Schwingung in einer Reaktionsrichtung zu erfassen, so dass die Drehrate basierend auf der erfassten Schwingung erfasst werden kann, weil diese von der erfassten Schwingung abhängig ist.

Es ist Aufgabe der vorliegenden Erfindung einen solchen Drehratensensor hinsichtlich der Genauigkeit der Drehrate zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung wird ein Sensor zum Erfassen einer Drehrate eines Objektes nach Anspruch 1 bereitgestellt.

Der Messaufnehmer kann die Schwingung des Geberelementes in Reaktionsrichtung direkt erfassen. Alternativ könnte das Geberelementent aber auch mit einer weiteren Masse gekoppelt sein, die vom Geberelement in Reaktionsrichtung zum Schwingen angeregt wird. Der Messaufnhemer könnte dann die Schwingung dieser zweiten Masse erfassen. Solange keine Anregung in Reaktionsrichtung erfolgt, könnte diese zweite Masse dann optional still stehen.

Dem angegebenen Sensor liegt die Überlegung zugrunde, dass die durch die Corioliskraft verursachte Schwingung des Geberelements winklig zur angeregten Schwingung mit der Anregefrequenz Temperatureffekten unterliegt, was zu einer fehlerhaften Erfassung der aus der durch die Corioliskraft verursachten Schwingung hervorgehenden Drehrate des Objektes führt.

Im Rahmen des angegebenen Sensors wird jedoch erkannt, dass die Temperatureffekte im Wesentlichen durch zwei verschiedene mechanische Wirkungen hervorgerufen werden. Einerseits führen temperaturbedingte Wärmebewegungen im Objekt zu mechanischen Spannungen, die auf die Lage des Geberelementes zum Objekt einen Einfluss haben, was letztendlich zu einer anderen Schwingung und damit einer Verfälschung der zu erfassenden Drehrate führt. Andererseits hat die Temperatur auch einen Einfluss auf die Frequenz der durch die Corioliskraft verursachten Schwingung des Geberelements, was ebenfalls zu einer anderen Schwingung und damit einer Verfälschung der zu erfassenden Drehrate führt.

Basierend auf dieser Erkenntnis liegt dem angegebenen Sensor die Idee zugrunde, die beiden zuvor genannten temperaturbedingten Wirkungen aufeinander abzustimmen, so dass sie in der Summe zwar weiterhin zu einer Veränderung der Schwingung des Geberelements und damit einer Verfälschung der Drehrate führen, die Abstimmung sollte jedoch derart durchgeführt werden, dass die Schwingung des Geberelement insgesammt temperaturunabhängig ist. Die Verfälschung könnte somit im Vorfeld bestimmt und bei der Auswertung der Schwingung und damit bei der Bestimmung der Drehrate berücksichtigt werden.

Im Rahmen dieser Idee stehen in dem angegebenen Sensor verschiedene Stellschrauben zur Verfügung, die vorbestimmte Bedingung einzustellen. Diese Stellschrauben können beispielsweise die Masse des Geberelements, die Federsteifigkeit des Rückstellelements, die relative Lage des Geberelements beispielsweise zur Drehachse oder beliebige andere verstellbare Systemparameter in dem angegebenen Sensor umfassen. Die Erfüllung der Bedingung kann beispielsweise durch eine geeignete Dimensionierung vorab, durch Simulationen vorab oder durch Testversuche mit Prototypen verifiziert werden.

In einer Weiterbildung des angegebenen Sensors umfasst die vorbestimmte Bedingung eine Betrachtung der Gegenüberstellung in einer Näherung. Die Näherung kann beispielsweise eine Linearisierung, eine Reihenentwicklung oder eine beliebige andere Vereinfachung der Gegenüberstellung der temperaturabhängigen Verschiebung des Frequenzabstandes zwischen der Anregefrequenz und der Reaktionsfrequenz und der temperaturabhängigen Lage des Geberelementes am Objekt umfassen. Auf diese Weise kann die zuvor genannte Abstimmung der Federkonstante auf die restlichen Bauteile des angegebenen Sensors erheblich vereinfacht werden. Dabei können die dem Fachmann bekannten analytischen Ausdrücke für die temperaturabhängige Verschiebung des Frequenzabstandes zwischen der Anregefrequenz und der Reaktionsfrequenz und für die temperaturabhängige Lage des Geberelementes der Vereinfachung zugrunde gelegt werden.

In einer besonderen Weiterbildung des angegebenen Sensors umfasst die vorbestimmte Bedingung ein Fehlerintervall, in das die Gegenüberstellung, insbesondere die genäherte Gegenüberstellung, innerhalb eines vorbestimmten Temperaturbereichs fallen muss. Das heißt, dass im Rahmen des angegebenen Sensors zwar keine vollständige Temperaturunabhängigkeit erreicht wird, die Temperaturabhängigkeit der mit dem angegebenen Sensor bestimmbaren Drehrate kann jedoch mit einem definierten Toleranzbereich angegeben werden, wodurch der angegebene Sensor anwendungsspezifisch ausgewählt werden kann, weil der Toleranzbereich bekannt ist.

Erfindungsgemäß ist das Geberelement eine Kapazitätselektrode, die in der Reaktionsrichtung gegenüber einer weiteren Kapazitätselektrode schwingt, wobei der Messaufnehmer eingerichtet ist, die Schwingung in der Reaktionsrichtung basierend auf einer Kapazität zwischen den beiden Kapazitätselektroden zu erfassen. Auf diese Weise kann die Schwingung über die Kapazität in einfacher Weise elektrisch erfasst werden.

Erfindungsgemäß weist das Rückstellelement eine Federkonstante auf, die von einer elektrischen Spannung zwischen den beiden Kapazitätselektroden abhängig ist. Die Spannung kann dabei die Feder in einer an sich bekannten Weise erweichen, was dem Fachmann unter dem Begriff "spring softening" Effekt bekannt ist.

Erfindungsgemäß ist die Spannung derart eingestellt, dass die Gegenüberstellung der vorbestimmten Bedingung genügt. Das heißt, dass die Spannung zwischen den Kapazitätselektroden eine weitere der oben beispielhaft aufgezählten Stellschrauben darstellt, der eingangs genannten Bedingung zu genügen.

In einer besonders bevorzugten Weiterbildung des angegebenen Sensors ruft die Reaktionsschwingung eine Änderung $\widehat{C}$ der Kapazität zwischen den beiden Kapazitätselektroden mit $\Delta f$ als Frequenzabstand, $\Omega$ als Drehrate, $x_0$ Amplitude der Schwingung mit der Anregefrequenz, $d$ als Abstand der Kapazitätselektroden und $C_s(0)$ als Ruhekapazität zwischen den beiden Kapazitätselektroden hervor, die in erster Näherung folgen-

$$\Delta\widehat{C} \approx \frac{\Omega\, x_0}{2\pi\,\Delta f\, d}\, C_s(0),$$

der Bedingung genügt      wobei

$$\frac{C_s(0)}{\Delta f\, d}$$

als vorbestimmte Bedingung der Term in einem vorbestimmten Temperaturbereich kleiner als eine vorbestimmte Fehlerschwelle ist. Auf diese Weise kann im Vorfeld rechentechnisch erfasst werden, ob die oben genannte vorbestimmte Bedingung erfüllt ist, oder nicht.

Gemäß einem weiteren Aspekt der Erfindung umfasst ein Verfahren zum Erfassen einer Drehrate eines Objektes mit einem Geberelement, das eingerichtet ist, winklig zur Drehachse der zu erfassenden Drehrate mit einer Anregefrequenz an einem ortsfest am Objekt befestigten Rückstellelement zu schwingen, so dass das Geberelement aufgrund der Corioliskraft winklig zur Drehachse und winklig zur Schwingungsrichtung in einer Reaktionsrichtung mit einer Reaktionsfrequenz ausgelenkt wird, die Schritte Erfassen der Schwingung in der Reaktionsrichtung, Bestimmen der Drehrate basierend auf der erfassten Schwingung, und Einstellen einer Federkonstante des Rückstellelements derart, dass eine Gegenüberstellung einer temperaturabhängigen Verschiebung eines Frequenzabstandes zwischen der Anregefrequenz und der Reaktionsfrequenz und einer temperaturabhängigen Lage des Geberelementes am Objekt einer vorbestimmten Bedingung genügt.

Das angegebene Verfahren kann um Schritte eingeschränkt werden, die den Merkmalen der Unteransprüche des angegebenen Sensors sinngemäß entsprechen.

Gemäß einem weiteren Aspekt der Erfindung ist eine Steuervorrichtung eingerichtet, ein Verfahren nach einem der vorstehenden Ansprüche durchzuführen.

Gemäß einem weiteren Aspekt der Erfindung umfasst ein Fahrzeug eine angegebene Steuervorrichtung und/oder einen angegebenen Drehratensensor.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

Fig. 1 ein Schaubild zur Verdeutlichung des Corioliseffektes an einer schwingenden Masse;

Fig. 2 ein Prinzipschaltbild eines Fahrzeuges mit einem Drehratensensor, und

Fig. 3 ein Prinzipschaltbild des Drehratensensors aus Fig. 2 zeigen.

In den Figuren werden gleiche technische Elemente mit gleichen Bezugszeichen versehen und nur einmal beschrieben.

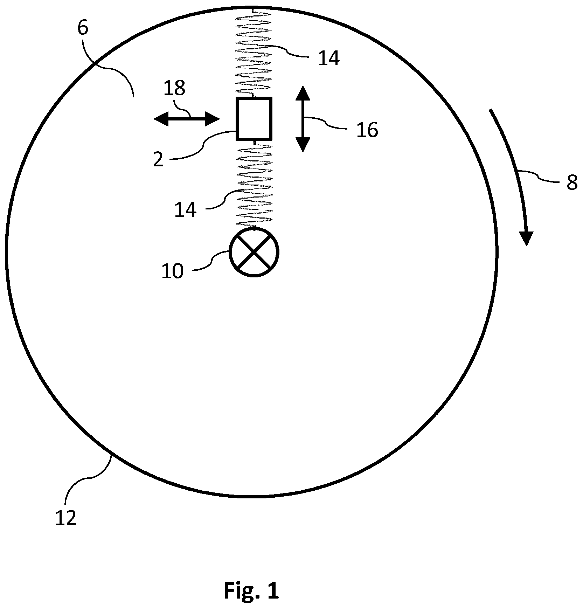

Es wird auf Fig. 1 Bezug genommen, die ein Schaubild zur Verdeutlichung des Corioliseffektes an einer schwingenden Masse 2 zeigt.

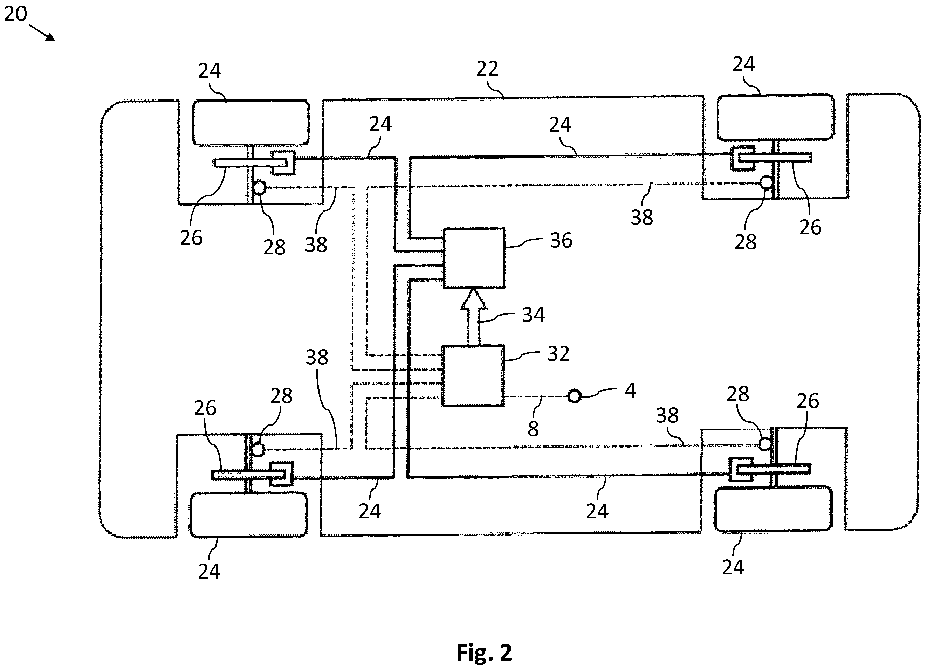

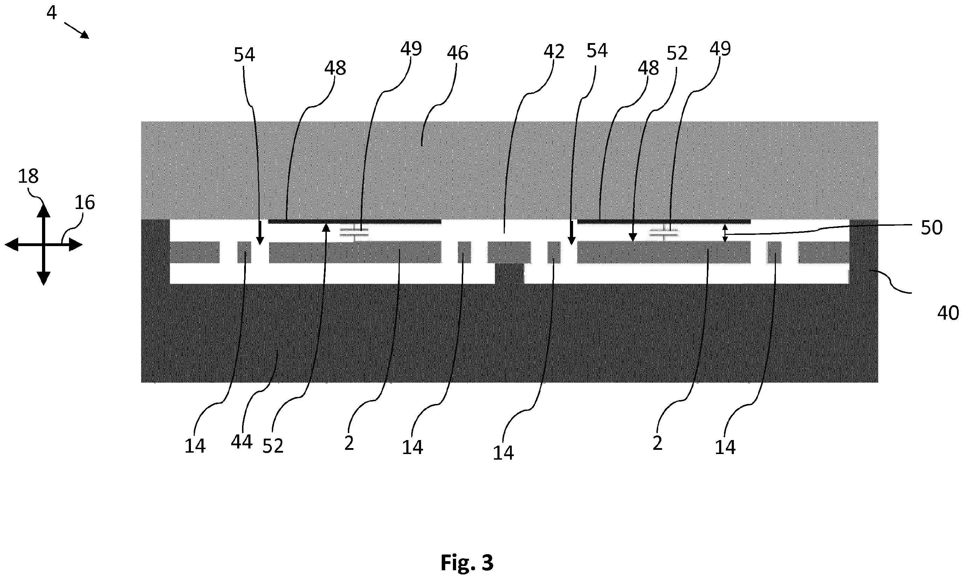

Die schwingende Masse 2 wird an späterer Stelle als Geberelement 2 für einen Drehratensensor 4 verwendet, auf den im Rahmen der Fig. 2 und 3 näher eingegangen wird.

Wie an sich bekannt wirkt der Corioliseffekt in rotierenden Systemen, wie der in Fig. 1 gezeigten Scheibe 6, die sich mit einer Winkelgeschwindigkeit 8 drehen soll. Zwischen einer Drehachse 10 und einem Außenumfang 12 der Scheibe 6 ist über zwei Federn 14 als Rückstellelemente 14 ein Geberelement 2 befestigt. Damit dreht sich das Geberelement 2 auf der rotierenden Scheibe 6 mit.

Der Corioliseffekt besagt in einer an sich bekannten Weise, dass wenn eine geradlinige Bewegung 16 des Geberelementes 2 rechtwinklig zur Drehachse 10 aus einem gegenüber der rotierenden Scheibe 6 ruhenden System beobachtet wird, das Geberelement eine Kraft rechtwinklig zur Bewegung 16 und rechtwinklig zur Drehachse 10 aufbringen muss, um diese geradlinige Bewegung 16 zu halten. Wenn diese Kraft nicht aufgebracht wird, dann wird das Geberelement 2 rechtwinklig zur Bewegung 16 und rechtwinklig zur Drehachse 10 mit einer Corioliskraft 18 bewegt. Diese Corioliskraft 18 wird in dem Drehratensensor 4 verwendet, um die Winkelgeschwindigkeit 8 beispielsweise der rotierenden Scheibe 6 zu erfassen, da die Corioliskraft 18 in an sich bekannter Weise von der Bewegung 16 und der Winkelgeschwindigkeit 8 abhängig ist. Zur Messung der Winkelgeschwindigkeit 8 wird das über die Rückstellelemente 14 auf der rotierenden Scheibe 6 gehaltene Geberelement 2 auf einer definierten Weise zu einer schwingenden Bewegung 16 angeregt. Durch die schwingende, sich periodisch umkehrende Bewegung 16 kehrt sich auch periodisch die Corioliskraft 18 um, und bringt das Geberelement 18 rechtwinklig zur Bewegung 16 und rechtwinklig zur Drehachse 10 zum Schwingen. Die Schwingung des Geberelementes 2 in Richtung der Corioliskraft 18, die folglich von der Winkelgeschwindigkeit 8 abhängt, wird im Drehratensensor 4 erfasst und zur Bestimmung der Winkelgeschwindigkeit 8 in einer an sich bekannten Weise, wie sie beispielsweise in der Druckschrift DE 10 2010 002 796 A1 erläutert ist, genutzt.

Bevor auf den Drehratensensor 4 näher eingegangen wird, soll ein Anwendungsbeispiel für den Drehratensensor 4 aufgezeigt werden.

Es wird auf Fig. 2 Bezug genommen, die eine schematische Ansicht eines Fahrzeuges 20 mit einer an sich bekannten Fahrdynamikregelung zeigt. Details zu dieser Fahrdynamikregelung können beispielsweise der DE 10 2011 080 789 A1 entnommen werden.

Das Fahrzeug 20 umfasst ein Chassis 22 und vier Räder 24. Jedes Rad 24 kann über eine ortsfest am Chassis 22 befestigte Bremse 26 gegenüber dem Chassis 22 verlangsamt werden, um eine Bewegung des Fahrzeuges 20 auf einer nicht weiter dargestellten Straße zu verlangsamen.

Dabei kann es in einer dem Fachmann bekannten Weise passieren, dass das die Räder 24 des Fahrzeug 20 ihre Bodenhaftung verlieren und sich das Fahrzeug 20 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 20 dafür Drehzahlsensoren 28 an den Rädern 24 auf, die eine Drehzahl 30 der Räder 24 erfassen. Ferner weist das Fahrzeug 20 den Drehratensensor 4 auf, der beispielsweise als Winkelgeschwindigkeit 8 beispielsweise die Gierrate des Fahrzeuges 20 ausgeben kann. Wie in der DE 10 2010 002 796 A1 erläutert, kann der Drehratensensor bis zu zwei Drehraten des Fahrzeuges 20 erfassen und so beispielsweise auch die Nickrate oder die Wankrate des Fahrzeuges ausgeben, je nachdem, in welche Richtung die in Fig. 1 gezeigte schwingende Bewegung 16 des Geberelements 2 angeregt wird.

Basierend auf den erfassten Drehzahlen 30 und der als Gierrate ausgebildeten Winkelgeschwindigkeit 8 kann ein Regler 32 in einer dem Fachmann bekannten Weise bestimmen, ob das Fahrzeug 20 auf der Fahrbahn rutscht oder sogar von der oben genannten vorgegebenen Trajektorie abweicht und entsprechend mit einem an sich bekannten Reglerausgangssignal 34 darauf reagieren. Das Reglerausgangssignal 34 kann dann von einer Stelleinrichtung 36 verwendet werden, um mittels Stellsignalen 38 Stellglieder, wie die Bremsen 26 anzusteuern, die auf das Rutschen und die Abweichung von der vorgegebenen Trajektorie in an sich bekannter Weise reagieren.

Der Regler 32 kann beispielsweise in eine an sich bekannte Motorsteuerung des Fahrzeuges 20 integriert sein. Auch können der Regler 32 und die Stelleinrichtung 36 als eine gemeinsame Regeleinrichtung ausgebildet und optional in die zuvor genannte Motorsteuerung integriert sein.

Es wird auf Fig. 3 Bezug genommen, die eine schematische Ansicht des Drehratensensors 4 zeigt, der als mikromechanischer Sensor ausgebildet ist.

Der Drehratensensor 4 umfasst ein Gehäuse 40, das eine Kavität 42 einschließt. In der vorliegenden Ausführung umfasst das Gehäuse 40 ein Trägersubstrat 44 und einen Deckel 46. Das Trägersubstrat 44 kann aus Silizium ausgebildet sein, wohingegen der Deckel 46 aus einem heterogenen Glass-Silizium-Verbund ausgebildet sein kann. Auf diese Weise kann die Kavität 42 mit einem an sich bekannten Wafer-Verbindungsverfahren unter Vakuum beispielsweise durch Glass-Frit-Löten oder anodisches Bonden verschlossen werden.

Innerhalb der Kavität 42 befinden sich zwei Geberelemente 2, welche über die Rückstellelemente 14 am Gehäuse 40 fixiert sind.

Bei solchen mikromechanischen Sensoren ist es üblich, die Geberelemente 2 in Richtung der anzuregenden Bewegung 16 über an sich bekannte kapazitive Kammantriebe oder über piezoelektrische Strukturen zum Schwingen anzuregen.

Im vorliegenden Beispiel ist das Geberelement 2 eine Kondensatorplatte, die mit je einer, als Ausleseelement 48 ausgebildeten Kondensatorplatte 48 eine Kapazität 49 ausbilden. Der Übersichtlichkeit halber sollen die Geberelemente 2 nachstehend als Geberkondensatorplatten 2 und die Ausleseelemente 48 als Auslesekondensatorplatten 48 bezeichnet werden. Die Auslesekondensatorplatten 48 sind dabei parallel zu den Geberkondensatorplatten 2 am Deckel 46 befestigt. Eine vertikale Distanz 50 zwischen Geberkondensatorplatte 2 und Auslesekondensatorplatte 48 entspricht einem Kondensatorplattenabstand 50, vom dem in Fig. 3 der Übersichtlichkeit halber nur einer angedeutet ist. Die Kondensatorplattenfläche 52 der Geberkondensatorplatten 2 und Auslesekondensatorplatten 48 zusammen mit dem Kondensatorplattenabstand 50 definieren dabei die Kapazitäten 49.

Zum Messen der Kapazitäten 49 werden zwischen je eine Geberkondensatorplatte 2 und eine Auslesekondensatorplatte 48 eine Auslesespannung 54 angelegt.

Wölbt sich beispielsweise der Deckel 46 aufgrund von intrinsischen oder externen Verspannungen gegen den Drehratensensor 4, so verändert sich der Kondensatorplattenabstand 50. Bei steigenden Temperaturen könnte dieser Kondensatorplattenabstand 50 beispielsweise vergrößert werden, was beispielsweise durch den Glasanteil im Deckel 46, der einen größeren thermischen Ausdehnungskoeffizienten als das Trägersubstrat 44 aus Silizium besitzt, hervorgerufen werden kann. Durch Verwendung von Poly-Silizium und/oder in der Mikromechanik üblichen anderen Materialien und/oder durch Einflüsse aus der Aufbau- und Verbindungstechnik auf das Gehäuse 40, kann der Kondensatorplattenabstand 50 bei steigenden Temperaturen aber auch kleiner werden. Ebenso kann das Vorzeichen des Zusammenhangs zwischen Kondensatorplattenabstand 50 und Temperatur abhängig vom Design des Drehratensensors 4 und des Gehäuses 40 sein, z. B. von den Strukturfixierungen und dem Design der Rückstellelemente 14.

Die Temperaturabhängigkeit auf das Messergebnis des Drehratensensors 4 kann mittels den nachstehenden Überlegungen weitestgehend ausgeblendet werden.

Um die Kapazität 49 zwischen den Geberkondensatorplatten 2 und den Auslesekondensatorplatten 48 messen zu können, muss wie bereits erläutert eine Auslesespannung 54 an die Kondensatorplatten 2, 48 angelegt werden. Diese Auslesespannung 54 übt zusätzlich eine elektrostatische Kraft entlang der Richtung der Corioliskraft 18 auf die Geberkondensatorplatte 2 aus, was die Federkonstante des gesamten schwingungsfähigen Systems reduziert.

Somit wird eine Resonanzfrequenz der Geberkondensatorplatten 2 in Richtung der Richtung der Corioliskraft 18, nachstehend Ausleserichtung genannt zum einen durch die mechanische Eigenresonanz in Ausleserichtung bestimmt und zum anderen durch die angelegte Auslesespannung 54 reduziert. Im Folgenden soll die Ausleserichtung zur besseren Übersichtlichkeit ebenfalls mit dem Bezugszeichen 18 der Corioliskraft versehen werden, da beide in dieselbe Richtung zeigen.

Vergrößert sich nun aufgrund der thermischen Verformung der Kondensatorplattenabstand 50, wird die Kapazität 49 geringer und somit auch die elektrostatische Kraft. Dies wiederum bewirkt eine Erhöhung der gesamten Federkonstante des schwingungsfähigen Systems, was ein Ansteigen der Resonanzfrequenz der Geberkondensatorplatten 2 in Ausleserichtung 18 bewirkt. Die Resonanzfrequenz in Richtung der erregten Bewegung 16, nachstehend Erregungsrichtung genannt, bleibt unverändert, da die elektrostatische Kraftwirkung entlang der Ausleserichtung 18 und somit senkrecht zu Erregungsrichtung wirkt. Im Folgenden soll die Erregungsrichtung zur besseren Übersichtlichkeit ebenfalls mit dem Bezugszeichen 16 der erregten Bewegung 16 versehen werden, da beide in dieselbe Richtung zeigen.

Durch die Veränderung der Resonanzfrequenz in Ausleserichtung 18 wird aber auch eine Differenzfrequenz zwischen der Resonanzfrequenz in Ausleserichtung 18 und der Resonanzfrequenz in Erregungsrichtung 16 verändert. Wie beispielsweise aus der DE 10 2010 002 796 A1 bekannt, hat diese Differenzfrequenz jedoch unmittelbar Einfluss auf die Empfindlichkeit des Drehratensensors 4. Vergrößert sich daher aufgrund von Verspannungen der Kondensatorplattenabstand 50 sinkt zwar die Empfindlichkeit des Drehratensensors 4 umgekehrt proportional zum Kondensatorplattenabstand 50, aber sie steigt jedoch im Gegenzug durch eine sich verkleinernde Differenzfrequenz, weil die elektrostatische Kraft nachlässt und somit die Resonanzfrequenz in Ausleserichtung 18 steigt. Das Verhalten ist ebenso beobachtbar bei sich verringerndem

Kondensatorplattenabstand 50, da die Empfindlichkeit des Drehratensensors 4 durch den geringeren Kondensatorplattenabstand 50 steigt, sich jedoch gleichzeitig wieder verringert, da die Differenzfrequenz größer wird.

Die temperaturbedingten Fehler und die daraus resultierenden temperaturbedingten Effekte auf die Empfindlichkeit des Drehratensensors 4 kompensieren also sich gegenseitig.

Die Resonanzfrequenz in Ausleserichtung 18 wird, wie oben ausgeführt, durch die Eigenresonanzfrequenz des schwingungsfähigen Systems in Ausleserichtung festgelegt, das sich jedoch durch elektrostatische Kräfte aufgrund der Auslesespannung verringern lässt. Um den zuvor genannten Gedanken und die Kompensation der temperaturbedingten Effekte im Drehratensensor 4 umzusetzen, kann damit die Auslesespannung 54 so eingestellt werden, dass die elektrostatische Kraft die Differenzfrequenz so weit vergrößert, bis sich die gewünschte Differenzfrequenz einstellt. Um die Differenzfrequenz unabhängig von der angelegten Auslesespannung 54 zwischen der Geberkondensatorplatte 2 und der Auslesekondensatorplatte 48 einzustellen, können auch zusätzliche Kondensatoren angebracht werden, welche z. B. auch genutzt werden können, um das mechanische Übersprechen zwischen der Erregungsrichtung 16 und der Ausleserichtung 18 zu vermeiden.

Durch diese In-situ-Kompensation der Empfindlichkeitsveränderung ist es nicht mehr nötig, für genaue Messungen der Winkelgeschwindigkeit 8, in einer an den Drehratensensor 4 angeschlossenen Signalauswerteschaltung aufwendige Kompensationsmethoden zu implementieren und mit vielen Temperaturstützpunkten beispielsweise über aufwändig entwickelte Kennlinien abzugleichen. Im Idealfall kann, wenn die Resonanzfrequenz in Erregungsrichtung 16 genau auf die Resonanzfrequenz in Ausleserichtung 18 abgestimmt ist, ein Kalibrieren der Empfindlichkeit des Drehratensensors 4 über die Temperatur entfallen.

Die zuvor beschriebene In-situ-Kompensation der Temperaturfehler ist sehr robust unter Variation der Stellschrauben, wie der Resonanzfrequenzen in Erregungsrichtung 16 und Ausleserichtung 18, der angelegten Auslesespannung 54, etc. Es kann bereits eine Sensitivitätsdrift von maximal ± 5%, erreicht werden, ohne dass zusätzliche aufwändige Kompensationsmechanismen im ASIC, wie z. B. zusätzliche Regelungen, eine Eichung der Sensitivitätsdrift des Drehratensensors 4 über Temperatur oder einen generellen Polynomialabgleich der Sensitivitätsdrift, wobei die Temperatur durch einen Temperatursensor gemessen wird, notwendig sind. Dabei wären jedoch auch Sensitivitätsdriften von maximal ± 3% problemlos möglich.

Die zuvor genannten Kompensationsmechanismen können die Temperaturstabilität des Drehratensensors 4 jedoch weiter steigern, so dass der Drehratensensor 4 auch für hochpräzise Anwendungen eingesetzt werden kann.

Ferner besteht die Möglichkeit, zusätzliche Effekte beim Einstellen des Arbeitspunktes zu berücksichtigen: Aufgrund der Änderung der elastischen Koeffizienten über Temperatur können die beiden Resonanzfrequenzen in Erregungsrichtung 16 und in Ausleserichtung 18 über Temperatur variieren. Auch aufgrund unterschiedlicher Einspannbedingungen über Temperatur kann sich die eventuell vorhandene Vorspannung der Rückstellelemente 14 ändern was zu einer Verschiebung der Resonanzfrequenzen in Erregungsrichtung 16 und in Ausleserichtung 18 führen kann. Sind diese Zusammenhänge bekannt und näherungsweise durch eine Funktion zu beschreiben, so kann die Vorspannung so eingestellt werden, dass auch unter diesen variablen Bedingungen die Empfindlichkeitsdrift minimal ist.

Um die Abstimmung der temperaturbedingten Fehler in der Resonanzfrequenz in Ausleserichtung 18 und der temperaturbedingten Fehler des Kondensatorplattenabstandes 50 vorab rechnerisch zumindest zu testen, hat sich folgende Formel als hilfreich erwiesen:

$$\Delta \widehat{C} \approx \frac{\Omega\, x_0}{2\,\pi\, \Delta f\; d} C_s(0)$$

Darin entsprechen neben den an sich bekannten Konstanten $\widehat{C}$ $\Delta\widehat{C}$ die Änderung der Kapazität 49 zwischen der Geberkondensatorplatte 2 und der Auslesekondensatorplatte 48 aufgrund der Bewegung der Geberkondensatorplatte 2 in Ausleserichtung, $\Delta f$ die Differenzfrequenz zwischen der Resonanzfrequenz in Ausleserichtung 18 und der Resonanzfrequenz in Erregungsrichtung 16, $\Omega$ die Winkelgeschwindigkeit 8, $x_0$ die Amplitude der Schwingung der Geberkondensatorplatte 2 in Bewegungsrichtung 16, $d$ den Kondensatorplattenabstand 50 und $C_s(0)$ die Ruhekapazität der Kapazität 49.

In dieser Formel sollte der Term $\dfrac{C_s(0)}{\Delta f\; d}$ temperaturunabhängig gehalten werden.

Patentansprüche

1. Sensor (4) zum Erfassen einer Drehrate (8) eines Objektes (6, 20) umfassend:

   - ein Geberelement (2), das eingerichtet ist, winklig zur Drehachse (10) der zu erfassenden Drehrate (8) mit einer Anregefrequenz an einem ortsfest am Objekt (6, 20) befestigten Rückstellelement (14) in einer Anregerichtung (16) zu schwingen, so dass das Geberelement (2) aufgrund der Corioliskraft (18) winklig zur Drehachse (10) und winklig zur Schwingungsrichtung (16) in einer Reaktionsrichtung (18) mit einer Reaktionsfrequenz ausgelenkt wird, und
   - einen Messaufnehmer (32), der eingerichtet ist, die Schwingung in der Reaktionsrichtung (18) zu erfassen,
   - wobei das schwingungsfähige Geberelement (2) derart ausgebildet ist, dass eine Gegenüberstellung einer temperaturabhängigen Verschiebung eines Frequenzabstandes zwischen einer Resonanzfrequenz in der Anregerichtung (16) und einer Resonanzfrequenz in der Reaktionsrichtung und einer temperaturabhängigen Lage (50) des Geberelementes (2) am Objekt (6, 20) einer vorbestimmten Bedingung genügt, die zu einer insgesamt temperaturunabhängigen Schwingung des Geberelements (2) führt,
   - wobei das Geberelement (2) eine Kapazitätselektrode (2) ist, die in der Reaktionsrichtung (18) gegenüber einer weiteren Kapazitätselektrode (48) schwingt, wobei der Messaufnehmer (32) eingerichtet ist, die Schwingung in der Reaktionsrichtung (18) basierend auf einer Kapazität (49) zwischen den beiden Kapazitätselektroden (2, 48) zu erfassen,
   - wobei das Rückstellelement (14) eine Federkonstante aufweist, wobei der Sensor so ausgebildet ist, dass diese Federkonstante von einer elektrischen Spannung (54) zwischen den beiden Kapazitätselektroden (2, 48) abhängig ist, und die Spannung (54) derart eingestellt ist, dass die Gegenüberstellung der vorbestimmten Bedingung genügt.

2. Sensor (4) nach Anspruch 1, wobei die vorbestimmte Bedingung eine Betrachtung der Gegenüberstellung in einer Näherung umfasst.

3. Sensor (4) nach Anspruch 2, wobei die vorbestimmte Bedingung ein Fehlerintervall umfasst, in das die genäherte Gegenüberstellung innerhalb eines vorbestimmten Temperaturbereichs fallen muss.

4. Sensor (4) nach einem der vorstehenden Ansprüche, wobei die Reaktionsschwingung eine Änderung $\Delta\widehat{C}$ der Kapazität (49) zwischen den beiden Kapazitätselektroden (2, 48) mit Δf als Frequenzabstand, Ω als Drehrate (8), $x_0$ als Amplitude der Schwingung mit der Resonanzfrequenz in Anregerichtung (16), d als Abstand (50) der Kapazitätselektroden (2, 48) und $C_S(0)$ als Ruhekapazität zwischen den beiden Kapazitätselektroden (2, 48) hervorruft, die in erster Näherung folgender Bedingung genügt

$$\Delta \hat{C} \approx \frac{\Omega\, x_0}{2\pi\, \Delta f\, d} C_s(0)$$

, und wobei als vorbestimmte Bedingung der Term $\dfrac{C_s(0)}{\Delta f\, d}$ in einem vorbestimmten Temperaturbereich kleiner als eine vorbestimmte Fehlerschwelle ist.

5. Verfahren zum Erfassen einer Drehrate (8) eines Objektes (6, 20) mit einem Geberelement (2), das eingerichtet ist, winklig zur Drehachse (10) der zu erfassenden Drehrate (8) mit einer Anregefrequenz an einem ortsfest am Objekt (6, 20) befestigten Rückstellelement (14) in einer Anregerichtung (16) zu schwingen, so dass das Geberelement (2) aufgrund der Coriolliskraft (18) winklig zur Drehachse (10) und winklig zur Schwingungsrichtung (16) in einer Reaktionsrichtung (18) mit einer Reaktionsfrequenz ausgelenkt wird, umfassend

- Erfassen der Schwingung in der Reaktionsrichtung (18),
- Bestimmen der Drehrate (8) basierend auf der erfassten Schwingung, und
- wobei das schwingungsfähige Geberelement (2) derart ausgebildet ist, dass eine Gegenüberstellung einer temperaturabhängigen Verschiebung eines Frequenzabstandes zwischen einer Resonanzfrequenz in der Anregerichtung (16) und einer Resonanzfrequenz in der Reaktionsrichtung und einer temperaturabhängigen Lage (50) des Geberelementes (2) am Objekt (6, 20) einer vorbestimmten Bedingung genügt, die zu einer insgesamt temperaturunabhängigen Schwingung des Geberelements (2) führt,
- wobei das Geberelement (2) eine Kapazitätselektrode (2) ist, die in der Reaktionsrichtung (18) gegenüber einer weiteren Kapazitätselektrode (48) schwingt, wobei der Messaufnehmer (32) eingerichtet ist, die Schwingung in der Reaktionsrichtung (18) basierend auf einer Kapazität (49) zwischen den beiden Kapazitätselektroden (2, 48) zu erfassen,
- wobei das Rückstellelement (14) eine Federkonstante aufweist, die von einer elektrischen Spannung (54) zwischen den beiden Kapazitätselektroden (2, 48) abhängig ist, und

- wobei die Spannung (54) derart eingestellt ist, dass die Gegenüberstellung der vorbestimmten Bedingung genügt.

6. Steuervorrichtung (32) zur Durchführung des Verfahrens nach Anspruch 5 mit einem Sensor (4) nach einem der Ansprüche 1 bis 4.

7. Fahrzeug (20) mit einem Sensor (4) nach einem der Ansprüche 1 bis 4 und/oder einer Steuervorrichtung (32) nach Anspruch 6.

## Claims

1. Sensor (4) for detecting a rotation rate (8) of an object (6, 20), comprising:

- an encoder element (2), which is configured to oscillate in an excitation direction (16) at an angle to the axis of rotation (10) of the rotation rate (8) to be detected at an excitation frequency on a restoring element (14), which is fastened in a stationary manner on the object (6, 20), so that the encoder element (2) is deflected, as a result of the Coriolis force (18), at an angle to the axis of rotation (10) and at an angle to the oscillation direction (16) in a reaction direction (18) at a reaction frequency, and
- a measurement pickup (32), which is configured to detect the oscillation in the reaction direction (18),
- wherein the oscillatory encoder element (2) is designed such that a comparison of a temperature-dependent shift of a frequency interval between a resonance frequency in the excitation direction (16) and a resonance frequency in the reaction direction and a temperature-dependent location (50) of the encoder element (2) on the object (6, 20) meets a predetermined condition, which leads to an oscillation of the encoder element (2) which is temperature-independent as a whole,
- wherein the encoder element (2) is a capacitance electrode (2), which oscillates in the reaction direction (18) in relation to a further capacitance electrode (48), wherein the measurement pickup (32) is configured to detect the oscillation in the reaction direction (18) based on a capacitance (49) between the two capacitance electrodes (2, 48),

- wherein the restoring element (14) has a spring constant, wherein the sensor is designed such that said spring constant is dependent on an electrical voltage (54) between the two capacitance electrodes (2, 48), and the voltage (54) is set such that the comparison meets the predetermined condition.

2. Sensor (4) according to Claim 1, wherein the predetermined condition comprises an observation of the comparison in an approximation.

3. Sensor (4) according to Claim 2, wherein the predetermined condition comprises an error interval, in which the approximated comparison must fall within a predetermined temperature range.

4. Sensor (4) according to any one of the preceding claims, wherein the reaction oscillation induces a change $\Delta\hat{C}$ of the capacitance (49) between the two capacitance electrodes (2, 48) with $\Delta f$ as the frequency interval, $\Omega$ as the rotation rate (8), $x_0$ as the amplitude of the oscillation at the resonance frequency in the excitation direction (16), d as the spacing (50) of the capacitance electrodes (2, 48), and $C_s(0)$ as the open-circuit capacitance between the two capacitance electrodes (2, 48), which meets the following condition in a first approximation

$$\Delta\hat{C} \approx \frac{\Omega x_0}{2\pi\Delta f d} C_s(0)$$

, and wherein, as a predetermined condition, the term $\dfrac{C_S(0)}{\Delta f d}$ is less in a predetermined temperature range than a predetermined error threshold.

5. Method for detecting a rotation rate (8) of an object (6, 20) using an encoder element (2), which is configured to oscillate in an excitation direction (16) at an angle to the axis of rotation (10) of the rotation rate (8) to be detected at an excitation frequency on a restoring element (14), which is fastened in a stationary manner on the object (6, 20), so that the encoder element (2) is deflected, as a result of the Coriolis force (18), at an angle to the axis of rotation (10) and at an angle to the oscillation direction (16) in a reaction direction (18) at a reaction frequency, comprising

- detecting the oscillation in the reaction direction (18),
- determining the rotation rate (8) based on the detected oscillation, and
- wherein the oscillatory encoder element (2) is designed such that a comparison of a temperature-dependent shift of a frequency interval between a resonance frequency in the excitation direction (16) and a resonance frequency in the reaction direction and a temperature-dependent location (50) of the encoder element (2) on the object (6, 20) meets a predetermined condition, which leads to an oscillation of the encoder element (2) which is temperature-independent as a whole,

- wherein the encoder element (2) is a capacitance electrode (2), which oscillates in the reaction direction (18) in relation to a further capacitance electrode (48), wherein the measurement pickup (32) is configured to detect the oscillation in the reaction direction (18) based on a capacitance (49) between the two capacitance electrodes (2, 48),
- wherein the restoring element (14) has a spring constant, which is dependent on an electrical voltage (54) between the two capacitance electrodes (2, 48), and
- wherein the voltage (54) is set such that the comparison meets the predetermined condition.

6. Control device (32) for carrying out the method according to Claim 5 having a sensor (4) according to any one of Claims 1 to 4.

7. Vehicle (20) having a sensor (4) according to any one of Claims 1 to 4 and/or a control device (32) according to Claim 6.

**Revendications**

1. Capteur (4) destiné à détecter une vitesse de rotation (8) d'un objet (6, 20), comprenant :

- un élément transmetteur (2) qui est conçu pour osciller dans une direction d'excitation (16) de manière angulaire par rapport à l'axe de rotation (10) de la vitesse de rotation à détecter (8) avec une fréquence d'excitation au niveau d'un élément de rappel (14) fixé en une position fixe sur l'objet (6, 20), de sorte que l'élément transmetteur (2), du fait de la force de Coriolis (18), soit dévié de manière angulaire par rapport à l'axe de rotation (10) et de manière angulaire par rapport à la direction d'oscillation (16) dans une direction de réaction (18) avec une fréquence de réaction, et
- un enregistreur de mesure (32) qui est conçu pour détecter l'oscillation dans la direction de réaction (18),
- l'élément transmetteur (2) apte à osciller étant configuré de telle sorte qu'une comparaison d'une dérive dépendante de la température d'un écart de fréquence entre une fréquence de résonance dans la direction d'excitation (16) et une fréquence de résonance dans la direction de réaction avec une position (50), dépendante de la température, de l'élément transmetteur (2) au niveau de l'objet (6, 20) satisfait à une condition prédéterminée qui mène à une oscillation de l'élément transmetteur (2) globalement indépendante de la température,

- l'élément transmetteur (2) étant une électrode de condensateur (2) qui oscille dans la direction de réaction (18) par rapport à une autre électrode de condensateur (48), l'enregistreur de mesure (32) étant conçu pour détecter l'oscillation dans la direction de réaction (18) en se basant sur une capacité (49) entre les deux électrodes de condensateur (2, 48),

- l'élément de rappel (14) possédant une constante de ressort, le capteur étant configuré de telle sorte que cette constante de ressort est dépendante d'une tension électrique (54) entre les deux électrodes de condensateur (2, 48) et la tension (54) est réglée de telle sorte que la comparaison satisfait à la condition prédéterminée.

2. Capteur (4) selon la revendication 1, la condition prédéterminée comprenant une observation de la comparaison dans une approximation.

3. Capteur (4) selon la revendication 2, la condition prédéterminée comprenant un intervalle de défaut dans lequel la comparaison approximative doit se trouver à l'intérieur d'une plage de températures prédéterminée.

4. Capteur (4) selon l'une des revendications précédentes, l'oscillation de réaction provoquant une modification $\Delta \hat{C}$ de la capacité (49) entre les deux électrodes de condensateur (2, 48) avec $\Delta f$ comme écart de fréquence, $\Omega$ comme vitesse de rotation (8), $x_O$ comme amplitude de l'oscillation avec la fréquence de résonance dans la direction d'excitation (16), d comme écart (50) entre les électrodes de condensateur (2, 48) et $C_S(0)$ comme capacité de repos entre les deux électrodes de condensateur (2, 48), laquelle satisfait à la condition suivante dans une première approximation $\Delta\hat{C} = \frac{\Omega x_0}{2\pi\Delta f d} C_s(0),$ et la condition prédéterminée étant que le terme $\frac{C_s(0)}{\Delta f d}$ dans une plage de températures prédéterminée soit inférieur à un seuil d'erreur prédéterminé.

5. Procédé de détection d'une vitesse de rotation (8) d'un objet (6, 20) avec un élément transmetteur (2) qui est conçu pour osciller dans une direction d'excitation (16) de manière angulaire par rapport à l'axe de rotation (10) de la vitesse de rotation à détecter (8) avec une fréquence d'excitation au niveau d'un élément de rappel (14) fixé en une position fixe sur l'objet (6, 20), de sorte que l'élément transmetteur (2), du fait de la force de Coriolis (18), soit dévié de manière angulaire par rapport à l'axe de rotation (10) et de manière angulaire par rapport à la direction d'oscillation (16) dans une direction de réaction (18) avec une fréquence de réaction, comprenant

- la détection de l'oscillation dans la direction de réaction (18),
- la détermination de la vitesse de rotation (8) en se basant sur l'oscillation détectée, et
- l'élément transmetteur (2) apte à osciller étant configuré de telle sorte qu'une comparaison d'une dérive dépendante de la température d'un écart de fréquence entre une fréquence de résonance dans la direction d'excitation (16) et une fréquence de résonance dans la direction de réaction avec une position (50), dépendante de la température, de l'élément transmetteur (2) au niveau de l'objet (6, 20) satisfait à une condition prédéterminée qui mène à une oscillation de l'élément transmetteur (2) globalement indépendante de la température,

- l'élément transmetteur (2) étant une électrode de condensateur (2) qui oscille dans la direction de réaction (18) par rapport à une autre électrode de condensateur (48), l'enregistreur de mesure (32) étant conçu pour détecter l'oscillation dans la direction de réaction (18) en se basant sur une capacité (49) entre les deux électrodes de condensateur (2, 48),

- l'élément de rappel (14) possédant une constante de ressort qui est dépendante d'une tension électrique (54) entre les deux électrodes de condensateur (2, 48), et

- la tension (54) étant réglée de telle sorte que la comparaison satisfait à la condition prédéterminée.

6. Dispositif de commande (32) destiné à mettre en oeuvre le procédé selon la revendication 5 avec un capteur (4) selon l'une des revendications 1 à 4.

7. Véhicule (20) équipé d'un capteur (4) selon l'une des revendications 1 à 4 et/ou d'un dispositif de commande (32) selon la revendication 6.

**Fig. 1**

EP 2 936 055 B1

**Fig. 2**

**Fig. 3**

EP 2 936 055 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010002796 A1
- DE 102011080789 A1